# EUROPÄISCHE PATENTSCHRIFT

(11) **EP 3 080 166 B1**
(45) Veröffentlichungstag und Bekanntmachung des Hinweises auf die Patenterteilung: **05.05.2021**
(21) Anmeldenummer: 14815270.5
(22) Anmeldetag: 03.12.2014
(51) Int. Cl.: C08C 19/38, C08F 36/06, B65D 81/26, B32B 27/08, C08G 81/02, C08L 87/00, C08K 5/098, C08J 5/18, B32B 27/32, B32B 27/30, B32B 27/34, B32B 27/36

(54) **EPOXYTERMINIERTES POLYBUTADIEN ALS SAUERSTOFF-FÄNGER**
EPOXY-TERMINATED POLYBUTADIENE USED AS AN OXYGEN SCAVENGER
POLYBUTADIÈNE À TERMINAISON ÉPOXY UTILISÉ COMME FIXATEUR D'OXYGÈNE

(30) Priorität: 12.12.2013 DE 102013225703
(43) Veröffentlichungstag der Anmeldung: 19.10.2016
(73) Patentinhaber: Evonik Operations GmbH, 45128 Essen (DE)
(72) Erfinder: HABERKORN, Niko, 46286 Dorsten (DE); DENKINGER, Peter, 48301 Nottuln (DE); NORDHOFF, Stefan, 45657 Recklinghausen (DE); NUMRICH, Uwe, 64846 Groß-Zimmern (DE)
(74) Vertreter: Evonik Patent Association
(86) Internationale Anmeldenummer: PCT/EP2014/076377
(87) Internationale Veröffentlichungsnummer: WO 2015/086391

(56) Entgegenhaltungen:
- WO-A1-2013/177266
- US-A1- 2010 279 048
- DATABASE CA [Online] CHEMICAL ABSTRACTS SERVICE, COLUMBUS, OHIO, US; 7. Februar 2001 (2001-02-07), NAGAO, YUJI ET AL: "Graft polymers with good oxygen-barrier property, their manufacture, and compositions therewith", XP002738022, gefunden im STN Database accession no. 2001:91272 -& JP 2001 031768 A (SHOWA DENKO KK; SHOWA ALUMINIUM CAN KK) 6. Februar 2001 (2001-02-06)

## Beschreibung

Die vorliegende Erfindung betrifft die Verwendung von Polybutadien mit endständigen Epoxygruppen als Sauerstofffänger, insbesondere als Bestandteil in Verbundstoffen für Verpackungsanwendungen.

Verbundstoffe sind Verpackungsmaterialien, bestehend aus mindestens zwei verschiedenen Materialien, die vollflächig miteinander verbunden sind und sich nicht von Hand trennen lassen. Sie sind eine Untergruppe der Schichtverbundwerkstoffe und damit der Verbundwerkstoffe. Daraus hergestellte Verpackungen werden Verbundstoffverpackungen oder auch Verbundverpackungen genannt.
Eine typische Verbundverpackung ist der Getränkekarton. Er besteht aus Karton sowie dem Kunststoff Polyethylen und kann auch für länger haltbare Produkte, wie Säfte, eine Schicht Aluminium enthalten. Weitere gängige Verpackungen aus Verbundstoffen sind Butterwickler (Aluminium/Papier), kunststoffbeschichtete Kartons für Tiefkühlkost oder Beutel für Instantsuppen (Aluminium/Kunststoff).

Eine Begrenzung des Kontaktes von sauerstoffempfindlichen Produkten mit Sauerstoff erhält und verbessert die Qualität und Lagerbarkeit vieler Produkte. Zum Beispiel kann durch Begrenzung des Sauerstoffkontaktes von sauerstoffempfindlichen Nahrungsmittelprodukten in einem Verpackungssystem die Qualität des Nahrungsmittelproduktes erhalten und ein Verderben verzögert werden. Zusätzlich hält eine solche Verpackung auch das Produkt länger im Lagerbestand, wodurch die durch Abfall und erneute Bevorratung verursachten Kosten vermindert werden.

In der Lebensmittelindustrie sind einige Techniken zur Begrenzung des Sauerstoffkontaktes entwickelt worden. Übliche Techniken schließen jene, bei denen Sauerstoff innerhalb der Verpackungsumgebung durch gewisse Mittel, die sich vom verpackten Artikel oder dem Verpackungsmaterial unterscheiden, verbraucht wird (z. B. durch Verwendung von sauerstoffabfangenden Beutelchen), jene, bei denen Umgebungen mit verringertem Sauerstoffgehalt in der Verpackung geschaffen werden (z. B. Verpacken unter modifizierter Atmosphäre und Vakuumverpacken), und jene ein, bei denen Sauerstoff vom Eindringen in die Verpackungsumgebung abgehalten wird (z. B. Barrierefolien). Darüber hinaus sind auch Kombinationen der genannten Techniken durchaus gebräuchlich. Bei den Barrierefolien ist zwischen Folien zu differenzieren, die aus einem sauerstoffimpermeablen Material bestehen (passive Barriereeigenschaft) und denen, die ein Material enthalten, welches den Sauerstoff chemisch oder physikalisch bindet (aktive Barriereeigenschaften). Häufig werden Systeme mit einer kombinierten aktiven und passiven Barrierewirkung mit Ein- und Mehrschichtaufbauten verwendet.

So sind beispielsweise Sauerstoff-abfangende Materialien direkt in die Verpackungsstruktur eingearbeitet worden. Diese Technik (im Folgenden als "aktive Sauerstoffbarriere" bezeichnet) kann einen einheitlichen Abfangeffekt in der gesamten Verpackung und ein Mittel zum Auffangen und Abfangen von Sauerstoff liefern, wenn dieser die Wände der Verpackung passiert. Aktive Sauerstoffbarrieren sind durch Einarbeitung anorganischer Pulver und/oder Salze als Teil der Verpackung gebildet worden, wie beispielsweise in US 5,153,038, US 5,116,660, US 5,143,769 oder US 5,089,323 beschrieben. Jedoch kann die Einarbeitung von solchen Pulvern und/oder Salzen die Transparenz und die mechanischen Eigenschaften des Verpackungsmaterials verschlechtern und die Verarbeitung, insbesondere wo dünne Folien gewünscht sind, komplizieren. Außerdem können diese Verbindungen sowie deren Oxidationsprodukte von dem Nahrungsmittel im Behälter absorbiert werden, was in dem Nahrungsmittelprodukt dazu führen kann, dass staatliche Standards für den menschlichen Verzehr nicht eingehalten werden.

Sauerstoffabfangende Zusammensetzungen, die Übergansgmetallkatalysatoren und ethylenisch ungesättigte Kohlenwasserstoffpolymere umfassen, sind in US 5,399,289 offenbart. Weil die dort beschriebenen Polymere amorph sind, können sie mit filmbildenden teilkristallinen Polymeren, die herkömmlicherweise verwendet werden, um Verpackungsmaterialien flexibel zu machen, schwer zu mischen und zu verarbeiten sein.

Polykondensationscopolymere, die überwiegend aus Polyestersegmenten und Polyolefinsegmenten basierend auf 1,3-Butadien bestehen, sind in WO 1998012244A1 für die Verwendung als Sauerstoff-entfernende Materialien beschrieben. Die Inkorporation der sauerstoffabfangenden Polybutadien-segmente ist hier jedoch auf eine PET-Matrix beschränkt und kann nicht auf weitere Polymermatrices ausgedehnt werden.

US-A-2010/279048 offenbart Polymermischungen die sich für Verpackungen eigenen und verbesserte Sauerstoffbarriereeigenschaften aufweisen. Die Polymermischungen umfassen ein oder mehrere Polybutadien-Homopolymere oder Copolymere mit mindestens einer Funktionalität, die in Kondensationsreaktionen eintreten können, ein oder mehrere Polyethylenterephthalat-Homopolymere oder Copolymere, die mit einem Katalysatorsystem gewonnen wurden, das Aluminiumatome und ein oder mehrere Alkali-Erd-Metallatome, Alkalimetallatome oder Alkali-Verbindungsrückstände umfasst, und ein oder mehrere Übergangsmetallatome.

JP-A-2001031768 & NAGAO, YUJI ET AL, "Graft polymers with good oxygen-barrier property, their manufacture, and compositions therewith", CA, CHEMICAL ABSTRACTS SERVICE, COLUMBUS, OHIO, US, (20010207), Database accession no. 2001:91272, URL: STN, XP002738022 [X] 1 * abstract * [I] 4,5,15, beschreibt die Bereitstellung eines Sauerstoffbarrierepolymers, das leicht und gut formbar und transparent ist und verbesserte Sauerstoffbarriereeigenschaften aufweist. Das Sauerstoffbarrierepolymer weist als Hauptbestandteil z.B. ein verseiftes Ethylen/Vinylacetat-Copolymer, ein Polyvinylalkoholharz oder ein Polyvinylidenchlorid-basiertes Harz, auf, welches mit einem Olefin-Oligomer (Nebenbestandteil) verbunden ist.

WO-A-2013/177266 offenbart ein Verfahren und System für das Abfangen von Sauerstoffmolekülen. Das System verwendet ein neuartiges Copolymer, welches das Polymerisationsprodukt von einem zyklischem aliphatischem Monomer und einem ungesättigten funktionellen Polymer ist, als Reduktionsmittel für Sauerstoffmoleküle.

Idealerweise sollte ein polymeres Material für die Verwendung in einer Sauerstoff-abfangenden Zusammensetzung gute Verarbeitungseigenschaften zeigen, imstande sein, direkt in den brauchbaren Verpackungsmaterialien gebildet zu werden, oder hohe Verträglichkeit mit jenen Polymeren aufweisen, die üblicherweise verwendet werden, um Verpackungsmaterialien herzustellen. Weiterhin sollten die entsprechenden Materialien keine Nebenprodukte erzeugen, die Farbe, Geschmack oder Geruch des verpackten Produktes beeinträchtigen. Es sollte somit sichergestellt sein, dass möglichst keine Monomere oder Oligomere aus der ein- bzw. mehrschichtigen Folie in das Innere des Verpackungsbehälters migrieren. Optimalerweise kann ein aus einer solchen Zusammensetzung gebildetes Verpackungsmaterial seine physikalischen Eigenschaften nach erheblichem Sauerstoffabfang bewahren.

Die vorab genannte komplexe technische Aufgabe wird im Rahmen der vorliegenden Erfindung gelöst. Dementsprechend ist ein erster Gegenstand der vorliegenden Erfindung die Verwendung von Polydien mit endständigen Epoxygruppen gemäß Anspruch 1 als Sauerstofffänger.

Der Einsatz eines Polydiens mit endständigen Epoxygruppen als Sauerstofffänger hat den erfindungsgemäßen Vorteil, dass eine ausreichend hohe Aktivität als Sauerstofffänger erreicht wird, verbunden mit einer geringen Toxizität der Polydiene, da keine Monomere oder Oligomere freigesetzt und migrieren können. Dies gilt insbesondere dann, wenn vorzugsweise alle Oligomere aufgrund der Epoxy-Modifizierung reaktiv in die Polymermatrix eingebunden werden. Darüber hinaus zeigen die genannten Polydiene eine gute Verträglichkeit mit anderen Komponenten von Beschichtungsmitteln. Die geringe Viskosität und Glasübergangstemperatur der entsprechenden Polydiene ermöglichen eine gute Verarbeitbarkeit und darüber hinaus die Möglichkeit der reaktiven Einbindung in Mehrschichtsysteme.

Die endständigen Epoxygruppen ermöglichen ein universelles reaktives Einbinden in diverse Polymermatrices, die zur Herstellung von Verpackungen als Sauerstoffbarriere eingesetzt werden. Als Matrixpolymere, die ein reaktives Einbinden mittels der Epoxygruppen des Polydiens ermöglichen, sind insbesondere Ethylen/Vinylalkohol-Copolymere (EVOH), Polyethylenterephthalat (PET), Polyamide und Polylactide zu nennen.

Im Gegensatz dazu besteht bei einem Polydien mit Hydroxyl-Gruppen nur die Möglichkeit, dieses ausschließlich in eine PET Matrix reaktiv einzubinden (siehe WO 1998012244A1)

Bei dem erfindungsgemäß eingesetzten Polydien handelt es sich um Polybutadien mit endständigen Epoxygruppen, wobei das Polybutadien die aus 1,3-Butadien abgeleiteten Monomereinheiten 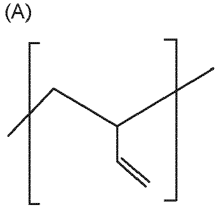 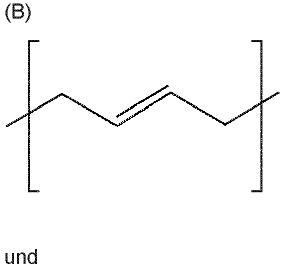 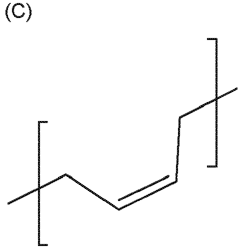 umfasst, wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt, wobei die Epoxygruppen die Formel (I) 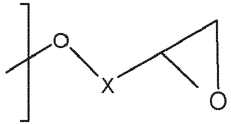 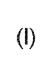 aufweisen und X eine lineare oder verzweigte Alkylengruppe darstellt, bevorzugt eine lineare Alkylengruppe der Formel -(CH₂)ₓ-, wobei x 1 bis 4, noch bevorzugter 1 ist.

Bei dem vorab genannten bevorzugten Polybutadien mit Epoxygruppen handelt es sich um durch radikalische Polymerisation von 1,3-Butadien erzeugtes Polybutadien mit Hydroxygruppen und daraus hergestelltes Polybutadien mit Epoxygruppen, jeweils umfassend die im Polybutadien enthaltenen aus 1,3-Butadien abgeleiteten Monomereinheiten A), B) und C), wobei eine eckige Klammer bei der in dieser Anmeldung gewählten formelmäßigen Darstellung der im Polybutadien enthaltenen aus 1,3-Butadien abgeleiteten Monomereinheiten A), B) und C) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer anderen funktionellen Gruppe, insbesondere einer Hydroxygruppe oder Epoxygruppe, verbunden ist. Die Monomereinheiten A), B) und C) können dabei in beliebiger Reihenfolge im Polymer angeordnet sein. Bevorzugt ist eine statistische Anordnung.

In einer bevorzugten Ausführungsform beträgt der Anteil von A, B und C an der Gesamtheit der im Polybutadien enthaltenen aus 1,3-Butadien abgeleiteten Monomereinheiten jeweils und unabhängig voneinander wenigstens 10 Mol-%.
Insbesondere bevorzugt beträgt der Anteil von A an der Gesamtheit der im Polybutadien enthaltenen aus 1,3-Butadien abgeleiteten Monomereinheiten 15 bis 30 Mol-%, der Anteil von B an der Gesamtheit der im Polybutadien enthaltenen aus 1,3-Butadien abgeleiteten Monomereinheiten 50 bis 70 Mol-% und der Anteil von C an der Gesamtheit der im Polybutadien enthaltenen aus 1,3-Butadien abgeleiteten Monomereinheiten 15 bis 30 Mol-%.

In einer bevorzugten Ausführungsform können neben den im Polybutadien enthaltenen aus 1,3-Butadien abgeleiteten Monomereinheiten A), B) und C) auch noch andere Monomereinheiten enthalten sein, insbesondere solche, die nicht aus 1,3-Butadien abgeleitet sind. In einer bevorzugtesten Ausführungsform stellt die Gesamtheit der im Polybutadien enthaltenen aus 1,3-Butadien abgeleiteten Monomereinheiten A), B) und C) jedoch einen Anteil an der Gesamtheit der in dem Polymer eingebauten Monomereinheiten, umfassend die aus 1,3-Butadien abgeleiteten und andere, von wenigstens 80, bevorzugt 90, noch bevorzugter 95, am bevorzugtesten 100 Molprozent dar.

Das erfindungsgemäß eingesetzte Polybutadien mit Epoxygruppen weist in einer bevorzugten Ausführungsform eine mittlere Funktionalität von 1,5 bis 3, bevorzugt 1,75 bis 2,5 auf. Dies bedeutet, dass ein Polybutadienmolekül unabhängig von seiner Länge durchschnittlich 1,5 bis 3, bevorzugt 1,75 bis 2,5 Epoxygruppen aufweist.

Die erfindungsgemäß eingesetzten Polybutadiene mit endständigen Epoxygruppen werden insbesondere hergestellt durch ein Verfahren, umfassend die Schritte
a) Bereitstellen eines mittels radikalischer Polymerisation hergestellten Polybutadiens mit Hydroxygruppen,
b) Umsetzen des Polybutadiens mit Hydroxygruppen aus Schritt a) mit einer Monoepoxyverbindung in einer Reaktionsmischung,
wobei das Molverhältnis zwischen endständigen Hydroxygruppen und der Monoepoxyverbindung 10:1 bis 1:10 beträgt, wobei die Temperatur 0 bis 150 °C beträgt, und wobei die Reaktionszeit 0,5 bis 24 Stunden beträgt,
c) Zugeben eines Alkalimetallhydroxids, Alkalimetallhydrogencarbonats oder Alkalimetallcarbonats zur Reaktionsmischung aus Schritt b),
wobei das Polybutadien mit endständigen Hydroxygruppen die aus 1,3-Butadien abgeleiteten Monomereinheiten 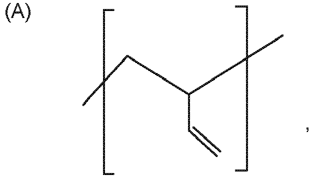 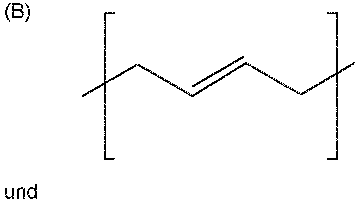 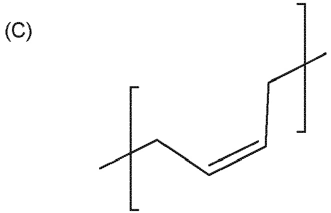 umfasst, wobei der Anteil von A an der Gesamtheit der im Polybutadien enthaltenen aus 1,3-Butadien abgeleiteten Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt, wobei bevorzugt der Anteil von A, B und C an der Gesamtheit der im Polybutadien enthaltenen aus 1,3-Butadien abgeleiteten Monomereinheiten jeweils und unabhängig voneinander wenigstens 10 % beträgt, wobei noch bevorzugter der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Molprozent beträgt.

Das Verfahren erfordert als Schritt a) das Bereitstellen eines mittels radikalischer Polymerisation hergestellten Polybutadiens mit Hydroxygruppen. Ein derartiges Polybutadien mit Hydroxygruppen kann beispielsweise durch Polymerisation von 1,3-Butadien in Anwesenheit von Wasserstoffperoxid, Wasser und einem organischen Lösungsmittel hergestellt werden, wie es in der EP-A-2492292 beschrieben ist. In einer bevorzugten Ausführungsform wird unter dem Begriff "Polybutadien", wie hierin verwendet, ein durch Polymerisation von Monomereinheiten mit jeweils wenigstens zwei konjugierten Doppelbindungen verstanden, wobei es sich in Reihenfolge zunehmender Bevorzugung bei wenigstens 80, 85, 90, 95, 98, 99 oder 99,9 % der Monomereinheiten um 1,3-Butadien handelt.

In Schritt b) des Verfahrens wird das Polybutadien mit Hydroxygruppen mit einer Monoepoxyverbindung in Anwesenheit von Inertgas umgesetzt. Die Monoepoxyverbindung ist insbesondere ausgewählt aus der Gruppe umfassend Epihalohydrine, bevorzugt Epichlorhydrin, β-Methylepichlorhydrin oder Epibromhydrin, und Alkylenoxide, bevorzugt Ethylenoxid, 1,2-Propylenoxid oder 1,2-Butylenoxid. Das Molverhältnis zwischen der Monoepoxyverbindung und endständigen Hydroxygruppen in der Reaktionsmischung in Schritt b) beträgt vorzugsweise 0,5 bis 2 zu 1, bevorzugt 0,9 bis 1,2 zu 1.

Bevorzugt wird Epichlorhydrin in einer Menge von 0,5 und 2 Mol Epichlorhydrin pro Äquivalent an einem Polybutadien gebundener Hydroxygruppe eingesetzt. Besonders bevorzugt wird 0,9 bis 1,2 Mol Epichlorhydrin pro Äquivalent an einem Polybutadien gebundener Hydroxygruppe eingesetzt.

Der Schritt b) des vorab genannten Verfahrens kann in Anwesenheit eines Lösungsmittels ablaufen, wobei das Lösungsmittel bevorzugt aus der Gruppe ausgewählt ist, die bei Raumtemperatur flüssige Aliphaten, Aromaten, Ester und Ether umfasst. In einer bevorzugten Ausführungsform handelt es sich bei dem Lösungsmittel um einen bei der Raumtemperatur flüssigen Aliphaten, beispielsweise Hexan, Heptan, Octan, Cyclohexan, um einen bei der Raumtemperatur (25 °C) flüssigen Aromaten, beispielsweise Benzol, Toluol, um einen bei der Raumtemperatur flüssigen Ester, beispielsweise Ethylacetat, Butylacetat, oder um einen bei der Raumtemperatur flüssigen Ether, beispielsweise Diethyl- und Diisopropylether, Dioxan und Tetrahydrofuran. Art und Menge des Lösungsmittels ist abhängig vom eingesetzten Polybutadien mit Hydroxygruppen und der Menge der Monoepoxyverbindung. Lösungsmittelgemische der genannten Lösungsmittel sind in beliebigen Mengenverhältnissen möglich. Der Anteil der Summe von Polybutadien mit Hydroxygruppen und Monoepoxyverbindung im Reaktionsgemisch kann jeweils zwischen 5 und 80 Gew.-% betragen.

Darüber hinaus kann in Schritt b) wenigstens ein Metall- oder Halbmetallsalz anwesend sein, das wenigstens ein Metall- oder Halbmetallkation, bevorzugt ausgewählt aus der Gruppe umfassend Bor, Aluminium, Zink und Zinn und wenigstens ein Anion umfasst, welches aus der Gruppe umfassend F⁻,Cl⁻, BF₄⁻, PF₆⁻, AsF₆⁻, SbF₆⁻, ClO₄⁻, IO₄⁻ und NO₃⁻ ausgewählt ist. Die Einsatzmenge des Katalysators beträgt bevorzugt zwischen 0,001 bis 0,5 Mol des Metallsalzes pro Äquivalent an einem Polybutadien gebundener Hydroxygruppe. Es können die Reaktionskomponenten und der Katalysator vorgelegt und dann zur Reaktion gebracht werden. Vorzugsweise wird der Metallsalzkatalysator mit dem Polybutadien mit Hydroxygruppen vorgelegt und danach wird die Monoepoxyverbindung, bevorzugt Epihalohydrin, hinzugegeben.

Weiterhin ist es bevorzugt Schritt b) in Anwesenheit eines Lösungsmittels durchzuführen und dieses vor, während oder nach Schritt c), bevorzugt nach Schritt c), von der Reaktionsmischung abzutrennen.

Weiterhin bevorzugt erfolgt Schritt b) in Anwesenheit von Inertgas bei reduziertem oder erhöhtem Druck. In einer bevorzugten Ausführungsform bedeutet der Begriff "Inertgas", wie hierin verwendet, ein Gas oder Gasgemisch, das in seiner Gesamtheit reaktionsträge ist. Bevorzugt handelt es sich bei dem Inertgas um Stickstoff, Edelgase oder Mischungen davon.

Bevorzugt dauert Schritt b) 0,5 bis 24 Stunden an. Die Temperatur in Schritt b) beträgt 0 bis 150, bevorzugt 0 bis 70 °C.

Beim Starten der Reaktion in Schritt b) kann sowohl das Polybutadien mit Hydroxygruppen als auch die Monoepoxyverbindung vorgelegt werden. Alternativ können auch beide Verbindungen gemeinsam vorgelegt werden. Danach wird das Reaktionsgemisch durch Aufheizen auf die Reaktionstemperatur gebracht.

In einer weiteren Ausführungsform kann überschüssige Monoepoxyverbindung nach Schritt b) und vor Schritt c) destillativ entfernt werden. Bevorzugt wird überschüssige Monoepoxyverbindung nach Schritt b) destillativ entfernt, wobei das Lösungsmittel bevorzugt erst nach dieser Entfernung der überschüssigen Monoepoxyverbindung hinzugegeben wird.

In Schritt c) erfolgt eine Dehydrohalogenierung durch Zugabe wenigstens eines Alkalimetallhydroxids als Base zur Bildung des Alkalimetallhalogenids zur Reaktionsmischung aus Schritt b). In Schritt c) des vorab genannten Verfahrens werden vorzugsweise 0,7 bis 1,4 Mol Alkalimetallhydroxid, Alkalimetallhydrogencarbonat oder Alkalimetallcarbonat pro Mol endständiger Hydroxygruppen in Schritt a) zugegeben. Die Temperatur in Schritt c) sollte zwischen 0 und 80 °C liegen.

Die durch das vorab genannte Verfahren hergestellten Polydiene, insbesondere Polybutadiene, mit endständigen Epoxygruppen eignen sich in besonderer Weise für die erfindungsgemäße Verwendung als Sauerstofffänger.

Bei der erfindungsgemäßen Verwendung handelt es sich insbesondere um Beschichtungen enthaltend Polydien mit endständigen Epoxygruppen.

Die vorliegende Erfindung betrifft ferner Verbundstoffe für Verpackungsanwendungen mindestens enthaltend ein erfindungsgemäß eingesetztes Polydien mit endständigen Epoxygruppen. In einer bevorzugten Ausführungsform bestehen die erfindungsgemäßen Verbundstoffe aus mindestens zwei Schichten, vorzugsweise aus voneinander verschiedenen Materialien.

Die erfindungsgemäßen Verbundstoffe können in allen dem Fachmann bekannten Formen von Verbundstoffverpackungen eingesetzt werden, beispielsweise als flexible Folienlagen, flexible Beutel, feste Behälter oder Kombinationen davon. Typische flexible Folien und Beutel schließen jene ein, die zum Verpacken verschiedener Nahrungsmittelgüter verwendet werden, und können aus einer oder einer Mehrzahl von Schichten gebildet werden, um das gesamte Folien- oder beutelartige Verpackungsmaterial zu bilden. Die erfindungsgemäß eingesetzten Polydiene mit endständigen Epoxygruppen können in einer, einigen oder allen der Schichten der Verbundstoffe verwendet werden. Materialien in Form von flexiblen Folien und Beuteln haben normalerweise eine Dicke im Bereich von 5 bis 260 Mikrometern.
Typische feste oder halbfeste Behälter schließen Behälter aus Kunststoff, Papier oder Pappe ein, wie jene, die für Säfte und Soft-Drinks verwendet werden, sowie thermogeformte Tabletts oder Schalen, die normalerweise eine Wanddicke im Bereich von 100 bis 1000 Mikrometern haben. Die erfindungsgemäß eingesetzten Polydiene mit endständigen Epoxygruppen können als integrale Schicht oder als Beschichtung des geformten halbfesten oder festen Verpackungsgegenstands verwendet werden.

Obwohl es unter dem Aspekt der Bequemlichkeit beim Verpacken und/oder der Abfangeffektivität bevorzugt sein kann, die vorliegende Erfindung als integralen Teil der Verpackungswand zu verwenden, kann die Erfindung auch als nicht-integrale Komponente dieses Verpackungsgegenstands verwendet werden, wie beispielsweise als Flaschenverschlussauskleidung, klebender oder nicht-klebender lagenförmiger Einsatz, Versiegelungsmaterialien, Sachet und Fasermatteneinsatz.

Verbundstoffverpackungen mindestens enthaltend ein erfindungsgemäß eingesetztes Polydien mit endständigen Epoxygruppen sind ebenfalls Gegenstand der vorliegenden Erfindung.

Neben Verpackungsgegenständen, die für Nahrungsmittel und Getränke verwendbar sind, können auch Verpackungen von Gegenständen, die andere sauerstoffempfindliche Produkte sind, von der vorliegenden Erfindung profitieren. Zu diesen Produkten gehören Pharmaka, sauerstoffempfindliche medizinische Produkte,
korrodierbare Metalle oder Produkte oder auch elektronische Geräte.

Die erfindungsgemäß eingesetzten Polydiene mit endständigen Epoxygruppen können durch konventionelle Techniken leicht verarbeitet werden. Die resultierenden Materialien haben ferner gute Handhabungseigenschaften und können Sauerstoff sowohl unter Umgebungsbedingungen (20 °C bis 30 °C) als auch Kühlbedingungen (weniger als 20 °C bis -20 °C) effektiv abfangen.

Die Wände der erfindungsgemäßen Verbundstoffverpackungen umfassen einzelne oder mehrere Schichten von Materialien. Die erfindungsgemäß eingesetzten Polydiene mit endständigen Epoxygruppen können als das einzige polymere Material verwendet werden, aus dem eine oder mehrere Schichten einer Folie gebildet werden (d. h. die Folie kann eine Mehrschichtfolie sein, die beispielsweise eine Gasbarriereschicht, eine Siegelschicht sowie andere Schichten mit unterschiedlichem Einsatzbereich aufweist, wie Fachleuten bekannt ist), sie kann mit anderen polymeren Sauerstoffabfangmitteln gemischt werden (wie Poly(octenylenen), herkömmlichen Polybutadien, Poly(ethylen/vinylcyclohexen) oder Poly(ethylenmethylacrylat/cyclohexenylmethylacrylat)-Copolymer (EMCM), oder kann mit einem oder mehreren Basispolymeren gemischt werden, die bekanntermaßen zur Herstellung von Verpackungsfolienmaterialien brauchbar sind und oft die resultierende Folie flexibler und/oder leichter verarbeitbar machen können und eine geringe Sauerstoffpermeabilität aufweisen. In einer bevorzugten Ausführungsform wird erfindungsgemäß das Polydien mit Epoxygruppen in eine Schicht eingebracht, die aus einem polymeren sauerstoffimpermeablen Basispolymer besteht. Die Sauerstoff-absorbierende Funktionalität kann erfindungsgemäß ebenfalls in Form eines Coatings enthaltend das Polydien mit Epoxygruppen innerhalb des besagten Mehrschichtaufbaus inkludiert werden. Des Weiteren kann die sauerstoffabsorbierende Funktionalität in einer Kleberschicht und/oder Druckdekorschicht enthaltend das Polydien mit Epoxygruppen innerhalb des Mehrschichtaufbaus dargestellt werden.

Unter Basispolymeren, auch Verdünnungspolymere genannt, werden im Sinne der vorliegenden Erfindung alle Polymere verstanden, in die das Polydien mit Epoxygruppen gemäß der vorliegenden Erfindung eingearbeitet werden kann, um als Bestandteil in Verbundstoffen für Verpackungsanwendungen eingesetzt zu werden. Zu geeigneten Basispolymeren gehören insbesondere jene aus der Gruppe ausgewählt umfassend, ohne darauf beschränkt zu sein, Polyethylene, wie beispielsweise Polyethylen niedriger Dichte, Polyethylen sehr niedriger Dichte, Polyethylen ultraniedriger Dichte, Polyethylen hoher Dichte und lineares Polyethylen niedriger Dichte, Polyester, wie beispielsweise Polyethylenterephthalat (PET) oder Polyethylennaphthenat (PEN); Polyvinylchlorid (PVC); Polyvinylidenchlorid (PVDC); Polycaprolactonpolymere und Ethylencopolymere, wie Ethylen/Vinylacetat-Copolymere (EVA und VAE), Ethylen/Alkyl(meth)acrylat-Copolymere (EMA), Ethylen/Vinylalkohol-Copolymere (EVOH), Poly(vinylalkohol) (PVOH), Ethylen/(Meth)acrylsaure-Copolymere, Ethylen/Butylacrylat(EBA)-Copolymere, Ethylen/Vinylalkohol, Ethylene/Acrylsäure (EAA), Polylactid, Ionomere und Polyamide, wie Polycaprolactam (Nylon 6), Metaxylylenadipamid (MXD6), Hexamethylenadipamid (Nylon 66) sowie verschiedene Amidcopolymere. Es können auch Gemische unterschiedlicher Basispolymere verwendet werden. Besonders bevorzugt werden Poly(ethylen/vinylalkohol) (EVOH), Poly(vinylalkohol) (PVOH), Polyethylenterephthalat (PET), und Polyamide, wie Polycaprolactam (Nylon 6), Metaxylylenadipamid (MXD6), Hexamethylenadipamid (Nylon 66) sowie verschiedene Amidcopolymere als Polymermatrix bzw. als Basispolymer eingesetzt.

Die erfindungsgemäß eingesetzten Polydiene mit endständigen Epoxygruppen können auch in nicht-integralen Verpackungskomponenten verwendet werden, wie Beschichtungen, Sachets, Flaschenverschlussauskleidungen, klebenden und nicht-klebenden lagenförmigen Einsätzen, Laminierungsklebstoffen, Coupons, Dichtungen, Versiegelungsmitteln oder Fasermatteneinsatzen. Die zuvor genannten Verdünnungspolymere sind allgemein semikristalline Materialien. Die Auswahl eines speziellen Verdünnungspolymers oder spezieller Verdünnungspolymere hängt im Wesentlichen von dem zu fertigenden Gegenstand und dessen Endanwendung ab. Fachleuten ist beispielsweise bekannt, dass bestimmte Polymere dem resultierenden Gegenstand Klarheit, Reinlichkeit, Barriereeigenschaften, mechanische Eigenschaften und/oder Textur verleihen.

In einer Ausführungsform der vorliegenden Erfindung kann das Polydien mit endständigen Epoxygruppen in Kombination mit weiteren Sauerstoffabfangmitteln vorliegen. Hierbei kann das weitere Sauerstoffabfangmittel in derselben Schicht wie das Polydien mit endständigen Epoxygruppen enthalten sein. Alternativ ist es auch möglich dass das weitere Sauerstoffabfangmittel Bestandteil einer von der das Polydien mit endständigen Epoxygruppen enthaltenden verschiedenen Schicht ist. Geeignete Sauerstoffabfangmittel sind bereits genannt, insbesondere eignen sich Poly(octenylene), herkömmlichen Polybutadiene, Poly(ethylen/vinylcyclohexene) oder Poly(ethylenmethylacrylat/cyclohexenylmethylacrylat)-Copolymere (EMCM).

In die vorab genannten Materialien können ein oder mehrere bekannte Antioxidantien eingebracht werden, um den Abbau der Komponenten während des Compoundierens und der Folienbildung zu verzögern. Zu geeigneten Antioxidantien gehören beispielsweise 2,6-Di(t-Butyl)-4-methylphenol (BHT), 2,2'-Methylenbis(6-t-butyl-p-cresol), Triphenylphosphit, Tris(nonylphenyl)phosphit, Dilaurylthiodipropionat, Vitamin E (alpha-Tocopherol), Octadecyl-3, 5-di-tert-butyl-4-hydroxyhydrocinnamat, Tetrakis[methylen-(3,5-di-tert-butyl-4-hydroxyhydrocinnamat)]methan und Tetrakis(2,4-di-tert-butylphenyl)-4,4'-biphenyldiphosphonit, ohne jedoch darauf begrenzt zu sein. Wenn als Teil der erfindungsgemäßen Behälter ein Antioxidans eingeschlossen wird, kann es in einer Menge vorhanden sein, die die Oxidation der Komponenten der Sauerstoffabfangzusammensetzung sowie anderer Materialien, die in dem resultierenden Gemisch vorhanden sind, während der Herstellung und Verarbeitung verhindert; die Menge liegt vorteilhaft jedoch unter derjenigen, die die Abfangaktivität der resultierenden Schicht, der resultierenden Folie oder des Gegenstands stört. Die in einer gegebenen Zusammensetzung erforderliche Menge kann von den darin vorhandenen Komponenten, dem speziellen verwendeten Antioxidans, dem Grad und der Menge der zur Herstellung des geformten Gegenstands verwendeten Wärmeverarbeitung abhängen. Dieses Antioxidans/diese Antioxidantien werden typischerweise in einer Menge von 0,01 bis 1 Gew.-% verwendet.

Andere Additive, die auch in die erfindungsgemäße Verpackung eingeschlossen werden können, umfassen Füllstoffe, Pigmente, Farbmaterialien, Verarbeitungshilfsmittel, Plastifizierungsmittel, Antibeschlagmittel und Antiblockiermittel, ohne notwendigerweise darauf begrenzt zu sein.

Die Mengen der Komponenten, die in der erfindungsgemäßen Verpackung verwendet werden, können die Verwendung und Effektivität dieser Zusammensetzung beeinflussen. Die Mengen an erfindungsgemäß eingesetzten Polydien mit endständigen Epoxygruppen, Antioxidans, polymeren Verdünnungsmitteln, anderen bekannten Additiven, können in Abhängigkeit von dem gewünschten Gegenstand und seiner Endanwendung variieren. Eine der Hauptfunktionen des erfindungsgemäß eingesetzten Polydiens mit endständigen Epoxygruppen besteht beispielsweise darin, während des Abfangprozesses irreversibel mit Sauerstoff zu reagieren. Die vorhandene Polymermenge beeinflusst somit in wesentlichem Ausmaß die Sauerstoffabfangkapazität der Zusammensetzung, d. h. die Menge an Sauerstoff, die die Zusammensetzung aufbrauchen kann. Die erfindungsgemäß eingesetzten Polydiene mit endständigen Epoxygruppen können Sauerstoffabfangeigenschaften mit einer erwünschten Geschwindigkeit und Kapazität liefern, während sie gute Verarbeitungs- und Verträglichkeitseigenschaften haben. Die erfindungsgemäß eingesetzten Polydiene mit endständigen Epoxygruppen können somit verwendet werden, um als solche oder als Gemisch mit folienbildenden Verdünnungspolymeren, wie Polyolefinen, ein Verpackungsmaterial zu liefern, das leicht hergestellt und verarbeitet werden kann.

Die vorliegende erfindungsgemäße Verpackung führt zu einer weiteren Verarmung eines Verpackungshohlraums an Sauerstoff, ohne Farbe, Geschmack und/oder Geruch des darin enthaltenen Produkts wesentlich zu verändern.

Die Menge der in der Verpackung enthaltenen Polydiene mit endständigen Epoxygruppen muss bezogen auf die Endanwendung des Gegenstands bestimmt werden, und kann im Bereich von 1 bis 100 Gew.-%, wie 5 bis 97,5 %, 10 bis 95 %, 15 bis 92,5 und 20 bis 90% der Verpackung oder daraus hergestellten Schicht liegen. Der Einbau niedriger Gehalte des vorliegenden Polydiene mit endständigen Epoxygruppen, z. B. 0,1 bis 15 Gew.-%, kann für aktive Barriereanwendungen verwendet werden, um das Eindringen von Sauerstoff in den Behälter zu verhindern. Für Kopfraum-Sauerstoffabfanganwendungen, bei denen große Mengen an Sauerstoff aus der Packung entfernt werden müssen, können höhere Gehalte an Polydienen mit endständigen Epoxygruppen verwendet werden, z. B. 21 bis 100 Gew.-%.

Die Polydiene mit endständigen Epoxygruppen können, wie bereits gesagt, zur Herstellung einer Abfang-Einschichtfolie, einer Abfangschicht einer Mehrschichtfolie und anderer Gegenstande für eine Vielfalt von Verpackungsanwendungen verwendet werden. Einschichtgegenstände können leicht durch Extrusionsverarbeitung hergestellt werden und liefern ein Produkt mit niedrigen Klebrigkeitseigenschaften. Diese Eigenschaften liefern, wie bereits erörtert, verbesserte Verarbeitbarkeit bei der Bildung einer defektfreien Folie und ähnlicher Verpackungsgegenstande und ferner bei der Verarbeitung als Teil des fertigen Verpackungsgegenstands.

Mehrschichtfolien werden typischerweise unter Verwendung von Coextrusion, Beschichtung, Laminierung oder Extrusion/Laminierung hergestellt, wie beispielsweise in US 5,350,622 und US 5,529,833 gelehrt wird.

Mindestens eine der zusätzlichen Schichten eines Mehrschichtgegenstands kann ein Material vom Barrieretyp einschließen. Als passive Sauerstoffbarriereschicht üblicherweise verwendete Polymere schließen Polyethylene, wie beispielsweise Polyethylen niedriger Dichte, Polyethylen sehr niedriger Dichte, Polyethylen ultraniedriger Dichte, Polyethylen hoher Dichte und lineares Polyethylen niedriger Dichte, Polyester, wie beispielsweise Polyethylenterephthalat (PET) oder Polyethylennaphthenat (PEN); Polyvinylchlorid (PVC); Polyvinylidenchlorid (PVDC); Polycaprolactonpolymere und Ethylencopolymere, wie Ethylen/Vinylacetat-Copolymere (EVA und VAE), Ethylen/Alkyl(meth)acrylat-Copolymere (EMA), Ethylen/Vinylalkohol-Copolymere (EVOH), Poly(vinylalkohol) (PVOH), Ethylen/(Meth)acrylsaure-Copolymere, Ethylen/Butylacrylat(EBA)-Copolymere, Ethylen/Vinylalkohol, Ethylene/Acrylsäure (EAA), Polylactid, Ionomere und Polyamide, wie Polycaprolactam (Nylon 6), Metaxylylenadipamid (MXD6), Hexamethylenadipamid (Nylon 66) sowie verschiedene Amidcopolymere ein. Es können auch Gemische unterschiedlicher Polymere verwendet werden. Besonders bevorzugt werden Poly(ethylen/vinylalkohol) (EVOH), Poly(vinylalkohol) (PVOH), Polyethylenterephthalat (PET), und Polyamide, wie Polycaprolactam (Nylon 6), Metaxylylenadipamid (MXD6), Hexamethylenadipamid (Nylon 66) sowie verschiedene Amidcopolymere als Polymermatrix bzw. als passive Sauerstoffbarriereschicht verwendetes Polymer eingesetzt.

Andere zusätzliche Schichten können eine oder mehrere Schichten einschließen, die sauerstoffdurchlässig sind. In einer Ausführungsform, wie flexiblen Nahrungsmittelverpackungen, können die Schichten (in der Reihenfolge ausgehend von der Außenseite der Verpackung bis zu der innersten Schicht der Verpackung)
(a) eine passive Sauerstoffbarriereschicht,
(b) eine Abfangschicht, d. h. eine, die die hier beschriebene Polydiene mit endständigen Epoxygruppen enthält, und gegebenenfalls
(c) eine sauerstoffdurchlässige Schicht einschließen.

Die Kontrolle der Sauerstoffbarriereschicht von Schicht (a) liefert ein Mittel zur Regulierung der Abfangaktivitätszeit der Packung, indem die Rate des Sauerstoffeintritts in die Abfangschicht (b) begrenzt wird, wodurch die Rate des Verbrauchs der Abfangkapazität begrenzt wird. Kontrolle der Sauerstoffdurchlässigkeit von Schicht (c) liefert ein Mittel, um unabhängig von der Zusammensetzung der Abfangschicht (b) eine obere Grenze der Rate der Sauerstoffabfangwirkung für die Gesamtstruktur zu setzen. Dies kann dem Zweck der Verlängerung der Handhabungslebensdauer der Folie in Gegenwart von Luft vor dem Siegeln der Packung dienen. Schicht (c) kann ferner eine Barriere gegen Migration der individuellen Komponenten oder Nebenprodukte der Abfangschicht in das Innere der Packung liefern. Der Begriff "dem Inneren ausgesetzt" bezieht sich auf einen Teil eines Verpackungsgegenstands mit den vorliegenden Polydienen mit endständigen Epoxygruppen, der entweder direkt oder indirekt (über Schichten, die O₂-durchlässig sind) dem inneren Hohlraum mit dem sauerstoffempfindlichen Produkt ausgesetzt ist. Schicht (c) kann ferner die Heißsiegelbarkeit, Klarheit und/oder Blockierbeständigkeit der Mehrschichtfolie verbessern. Weitere zusätzliche Schichten, wie Verbindungsschichten, Aufreißschichten und Siegelschichten, können auch verwendet werden. Typischerweise in diesen Verbindungsschichten verwendete Polymere schließen beispielsweise anhydridfunktionale Polyolefine ein.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

Herstellung von Polybutadien mit Epoxy-Gruppen:
POLYVEST EP HT (Fa. Evonik) und Poly bd R-20LM (Fa. Cray Valley) wurden für die Herstellung der Polybutadiene mit Epoxygruppen genutzt.

Die Synthese des POLYVEST EP HT erfolgt gemäß der in der Schrift EP-A-2492292 beschriebenen Synthesevorschrift.

### Beispiel 1:

116,8 g (0,1 Mol OH-Äquivalent) POLYVEST EP HT, gelöst in 83,2 g Toluol werden in einem mit Thermometer, Rührer, Rückflusskühler, Stickstoffüberleitung und Tropftrichter versehenen Sulfierkolben zusammen mit 0,19 g (0,001 Mol) SnCl2 vorgelegt. Dazu werden bei Raumtemperatur 10,18 g (0,11 Mol) Epichlorhydrin unter Rühren gegeben. Das Reaktionsgemisch wird 5 Stunden auf 100 °C Innentemperatur erhitzt. Nach dem Abkühlen auf 50 °C werden innerhalb von 30 Minuten 1,6 g (0,02 Mol) 50 %-ige wässrige NaOH-Lösung und 3,6 g (0,09 Mol) pulverisiertes NaOH portionsweise dazugegeben. Diese Mischung wird noch eine Stunde bei 50 °C gerührt. Das Reaktionsgemisch wird filtriert. Die organische Phase wird über MgSO4 getrocknet, filtriert und vom Lösemittel im Vakuum abgetrennt. 112 g (91,5 % der Theorie) des nahezu farblosen Polybutadienglycidylethers mit einem Äquivalentgewicht von 1840 konnten isoliert werden. Das Produkt hat eine mit dem Rotationsviskosimeter ermittelte Viskosität von 14 Pa·s be 20 °C. Der ermittelte Tg-Wert ist-78 °C. Die Mikrostruktur des eingesetzten Polybutadiens mit Hydroxygruppen bleibt erhalten (22 % 1,2-vinyl, 20 % 1,4-cis, 58 % 1,4-trans).

### Beispiel 2:

58,4 g (0,1 Mol OH-Äquivalent) Poly bd R-20LM, gelöst in 41,6 g Toluol werden in einem mit Thermometer, Rührer, Rückflusskühler, Stickstoffüberleitung und Tropftrichter versehenen Sulfierkolben zusammen mit 0,19 g (0,001 Mol) SnCl2 vorgelegt. Dazu werden bei Raumtemperatur 10,18 g (0,11 Mol) Epichlorhydrin unter Rühren gegeben. Das Reaktionsgemisch wird 5 Stunden auf 100 °C Innentemperatur erhitzt. Nach dem Abkühlen auf 50 °C werden innerhalb von 30 Minuten 1,6 g (0,02 Mol) 50 %-ige wässrige NaOH-Lösung und 3,6 g (0,09 Mol) pulverisiertes NaOH portionsweise dazugegeben. Diese Mischung wird noch eine Stunde bei 50 °C gerührt. Das Reaktionsgemisch wird filtriert. Die organische Phase wird über MgSO4 getrocknet, erneut filtriert und vom Lösemittel im Vakuum abgetrennt. 56,3 g (87,9 % der Theorie) des nahezu farblosen Polybutadienglycidylethers mit einem Äquivalentgewicht von 1010 konnten isoliert werden. Das Produkt hat eine mit dem Rotationsviskosimeter ermittelte Viskosität von 4,2 Pa·s be 20 °C. Der ermittelte Tg-Wert ist-71 °C. Die Mikrostruktur des eingesetzten Polybutadiens mit Hydroxygruppen bleibt erhalten (22 % 1,2-vinyl, 20 % 1,4-cis, 58 % 1,4-trans)

### Reaktive Extrusion:

### Beispiel 3:

Es wurde ein Doppelschneckenextruder der Fa. Leistritz (Modell: Micro GL27) mit einem Schneckendurchmesser von 27 mm sowie eine Länge von 40 LD verwendet. Der Extruder war mit einem Vakuum-Entgaser ausgestattet.

Das granulierte Polyamid-6 (Ultramid B27 E von Fa. BASF) wurde dem Extruder über einen mit Stickstoff abgedeckten Beschicker zugeführt. Die Extrusion wurde bei 200 U/min, bei einer Temperatur von ca. 260°C und einem mittleren Durchsatz von 10 kg/h durchgeführt.

Das flüssige Polybutadien mit Epoxygruppen wurde mit einer Flüssigdosierpumpe direkt in die Mischzone des Extruders injiziert. Die Injektionsrate wurde so eingestellt, dass 2,5, 5,0 bzw. 7,5 Gew.-% Polybutadien mit Epoxygruppen, bezogen auf die Polyamid-6-Menge, eingemischt wurden.

Das Strangextrudat wurde in einem Wasserbad abgekühlt und anschließend granuliert.

Der reaktive Einbau des Polybutadiens mit Epoxygruppen in die Polyamid-6-Matrix konnte anhand von Gelpermeationschromatographie (GPC) verfolgt werden. Hierzu wurden die Compounds jeweils mit einer Konzentration von c = 5 g/L in Hexafluoroisopropanol + 0,05 mol Kaliumtrifluoroacetat bei Raumtemperatur gelöst. Als externer Standard wurde Ethylbenzol eingesetzt. Als stationäre Phase für die Gelpermeationschromatographie wurde eine PFG-Säulenkombination (a) 30 cm, 7 µm, 1000 Å; b) 30 cm, 7 µm, 300 Å; c) 30 cm, 7 µm, 100 Å) verwendet. Die Detektion erfolgte mit einer Kombination aus Brechungsindex und UV bei 256 nm. Die in Tabelle 1 angegebenen mittleren Molekulargewichte beziehen sich auf einen Kalibrierung mit einem Polymethylmethacrylat-Standard.

**Tabelle 1:**

| Compound | Anteil Polybutadien mit Epoxygruppen | Anteil Polyamide | Relatives mittleres Molekulargewicht Mw ((g/mol) |
|---|---|---|---|
| 1 | 0 | 100 | 63300 |
| 2 | 2,5 | 97,5 | 71400 |
| 3 | 5,0 | 95,0 | 73500 |
| 4 | 7,5 | 92,5 | 79400 |

Mit zunehmenden Anteil an bei der reaktiven Extrusion eingesetzten epoxy-terminierten Polybutadien steigt das mittlere Molekulargewicht (Mw) an. Die GPC-Elugramme zeigen des weiteren kein Signal an nicht eingebundenen epoxy-terminierten Polybutadien. Basierend auf diesen analytischen Ergebnissen ist von einer kompletten reaktiven Einbindung des epoxymodifizierten Polybutadiens in die PA-6-Matrix auszugehen.

### Beispiel 4:

Es wurde ein Doppelschneckenextruder der Fa. Leistritz (Modell: Micro GL27) mit einem Schneckendurchmesser von 27 mm sowie eine Länge von 40 LD verwendet. Der Extruder war mit einem Vakuum-Entgaser ausgestattet.

Das granulierte EVOH (EVAL-F 101B von der Fa. Kuraray) wurde über einen mit Stickstoff abgedeckten Beschicker dem Extruder zugeführt. Die Extruder wurde bei 200 rpm, bei einer Temperatur von ca. 220°C und einem mittleren Durchsatz von 10-20 kg/h betrieben.

Das flüssige Polybutadien mit Epoxygruppen wurde mit einer Flüssigdosierpumpe direkt in die erste Mischzone des Extruders injiziert. Die Injektionsrate wurde so eingestellt, dass 2,5, 5,0 bzw. 7,5 Gew.-% Polybutadien mit Epoxygruppen, bezogen auf die EVOH, eingemischt wurden.

Das Extrudat wurde in einem Wasserbad abgekühlt und anschließend granuliert.

### Beispiel 5:

Es wurde ein Doppelschneckenextruder der Fa. Leistritz (Modell: Micro GL27) mit einem Schneckendurchmesser von 27 mm sowie eine Länge von 40 LD verwendet. Der Extruder war mit einem Vakuum-Entgaser ausgestattet.

Das granulierte PET (Lighter C93 von der Fa. Equipolymers) wurde über einen mit Stickstoff abgedeckten Beschicker dem Extruder zugeführt. Die Extruder wurde bei 200 rpm, bei einer Temperatur von ca. 270°C und einem mittleren Durchsatz von 10 kg/h betrieben.

Das flüssige Polybutadien mit Epoxygruppen wurde mit einer Pumpe direkt in die Mischzone de
Extruders injiziert. Die Injektionsrate wurde so eingestellt, dass 2,5, 5,0 bzw. 7,5 Gew.-% Polybutadien mit Epoxygruppen bezogen auf die PET-Menge eingemischt wurden.

Das Strangextrudat wurde in einem Wasserbad abgekühlt und anschließend granuliert. Das Granulat wurde unter Stickstoffabdeckung gelagert.

### Herstellung von Ein- und Mehrschichtfolien:

Es wurde eine Sieben-Schicht Coextrusionsanlage zur Herstellung von Ein- und Mehrschichtfolien basierend auf den in Beispiel 3-5 beschriebenen Compounds verwendet. Die Foliendicke wird mit einem kapazitiven Sensor inline überwacht. Der Hauptextruder hat einen Schneckendurchmesser von 30 mm bei einer Verfahrenslänge von 30 D. Zwei Coextruder haben einen Schneckendurchmesser von 20 mm bei einer Verfahrenslänge von 25 D, der dritte Coextruder hat einen Schneckendurchmesser von 25 mm bei einer Verfahrenslänge von 25 D. Die Düsenbreite beträgt 300 mm, aus der eine maximale Folienbreite von ca. 250 mm resultiert. Den Extrusionskomponenten ist eine kühl-/heizbare Chill-Roll/Glättwerks-Einheit mit Randbeschnitt und Wickeleinheit nachgeschaltet. Die maximale Abzugsgeschwindigkeit beträgt 16 m/min, die Foliendicken sind von ca. 0,02 mm bis ca. 1,5 mm variierbar.

### Beispiel 6: Herstellung von Polyamid-6-basierten Einschichtfolien:

Dieses Beispiel beschreibt die Herstellung einer Einschichtfolie des in Polyamid-6-basierten Compounds (siehe Beispiel 3). Vor dem Extrusionsprozess wurde fein zermahlenes Cobaltstearat-Pulver zum granulierten Compound zugemischt. Die Menge an zugemischten Cobaltstearat betrug 0,25 Gew.-%.

Das Gemisch wurde der Extrusionsanlage in einem einen mit Stickstoff abgedeckten Beschicker zugeführt.

Der Compound wurde bei einer Temperatur von 260 °C extrudiert und bei einer Düsentemperatur von 280°C ausgetragen und auf die Chill-Roll/Glättwerks-Einheit gegeben. Die Schichtdicke der Einschichtfolie wurde auf 100 µm eingestellt. Die Folien wurden unter Stickstoffabdeckung gelagert.

### Beispiel 7: Herstellung von PET-basierten Einschichtfolien:

Dieses Beispiel beschreibt die Herstellung einer Einschichtfolie des PET-basierten Compounds (siehe Beispiel 5). Vor dem Extrusionsprozess wurde fein zermahlenes Cobaltstearat-Pulver zum granulierten Compound zugemischt. Die Menge an zugemischten Cobaltstearat betrug 0,5 Gew.-%.

Das Gemisch wurde der Extrusionsanlage in einem einen mit Stickstoff abgedeckten Beschicker zugeführt.

Der Compound wurde bei einer Temperatur von 240 °C extrudiert und bei einer Düsentemperatur von 260 °C ausgetragen und auf die Chill-Roll/Glättwerks-Einheit gegeben. Die Schichtdicke der Einschichtfolie wurde auf 250 µm eingestellt. Die Folien wurden unter Stickstoffabdeckung gelagert.

### Beispiel 8: Herstellung von 5-Schichtfolien:

Dieses Beispiel beschreibt die Herstellung einer 5-Schichtfolie bestehend aus einem Schichtaufbau in folgender Reihenfolge Polypropylen (Moplen HP640J), Admer QF 551 E (Fa. Mitsui Chemicals), Compound bestehend aus EVOH und epoxy-terminiertes Polybutadien, Admer QF 551 E und Polypropylen. Vor dem Extrusionsprozess wurde fein zermahlenes Cobaltstearat-Pulver zum granulierten Compound EVOH/Epoxy-terminiertes Polybutadien zugemischt. Die Menge an zugemischten Cobaltstearat betrug 0,5 Gew.-%.

Das Compound wurde dem Hauptextruder in einem einen mit Stickstoff abgedeckten Beschicker zugeführt. Der Compound wurde bei einer Temperatur von 235 °C extrudiert. Das beim Schichtaufbau als Außenschicht eingesetzte Polypropylen wurde in einem der Coextruder bei 240 °C extrudiert. Im zweiten Coextruder wurde das als Haftvermittler fungierende Admer QF 551 E bei 240 °C eingesetzt. Das gemeinsame Strangextrudat wurde mit einer Düsentemperatur von 245°C ausgefahren und auf die Chill-Roll/Glättwerks-Einheit gegeben. Die Schichtdicke der 5-Schichtfolie wurde so eingestellt, dass sich Schichtdicken der beiden Polypropylen-Außenschichten von jeweils 25 µm, einer 10 µm-Admer-Schicht und einer Compound-Mittelschicht von 10 µm ergaben. Die Mehrschichtfolien wurden unter Stickstoffabdeckung gelagert.

### Untersuchung der Sauerstoffaufnahme:

Untersucht wurden die in Beispiel 6 hergestellten Einschichtfolien. Die Proben wurden in Messzellen gelagert. Die Messzellen bestehen aus Edelstahl. Der Innendurchmesser beträgt 9,1 cm. Die Höhe innen beträgt 2,3 cm, wodurch sich ein Kopfraumvolumen von 150 cm³ ergab. An den Außenseiten befanden zwei gegenüberliegende Ventile mit Absperrhähnen. Durch diese ließ sich die Zelle mit Gas spülen. Eine Glasplatte mit einem Durchmesser von 12 cm diente zum Verschließen der Messzellen.Durch den verschraubbaren Dichtungsring presst sie sich auf die Zelle. Die Zelle ist somit ein abgeschlossenes System.

Für die Bestimmung des Sauerstoffpartialdruckes in den Messzellen wurde das Messgerät OXY-4 Gerät verwendet. Die Messung des Sauerstoffpartialdruckes funktioniert nach folgendem Prinzip der dynamischer Lumineszenz- Auslöschung. Aus diesen Informationen wurde unter Anwendung der idealen Gasgleichung der Sauerstoffgehalt in der Zelle berechnet. Die Reduzierung des Sauerstoffgehaltes in der Messzelle entspricht der absorbierten Menge Sauerstoff.
Nach Erreichen von nahe Null Millibar Sauerstoff in der Zelle, wurde die Zelle mit synthetischer Luft gespült. Die verbrauchten Mengen Sauerstoff wurden aufsummiert.

Untersucht wurden die in Beispiel 6 hergestellten Einschichtfolien.

Die Messungen wurden bei einer Temperatur von 23 °C durchgeführt. Der Kopfraum der Messzelle betrug 150 cm³.

Die Sauerstoffpartialdruck im Kopfraum wurde als Funktion der Zeit aufgenommen und in mg O₂/g Folie umgerechnet. Untersucht wurden Einschichtfolien mit einer Schichtdicke von 100 µm

**Tabelle 2. O₂-Aufnahme von PA-6-basierten Compounds mit epoxy-terminierten Polybutadien:**

| PB mit Epoxygruppen /Gew % | Co-Stearat-[ppm] | O₂-Aufnahme nach 50 Tagen [mg O₂/g Folie] | O₂-Aufnahme nach 50 Tagen [mg O₂/g Polybutadien] | O₂-Aufnahme nach 150 Tagen [mg O₂/g Folie] | O₂-Aufnahme nach 150 Tagen [mg O₂/g Polybutadien] |
|---|---|---|---|---|---|
| 0 | 2500 | <0,5 | -- | <0,5 | -- |
| 5,0 | 0 | 3 | 60 | 6,0 | 120 |
| 2,5 | 2500 | 3,5 | 140 | 5,0 | 210 |
| 5,0 | 2500 | 4,0 | 80 | 7,5 | 150 |
| 7,5 | 2500 | 8,0 | 110 | 13,0 | 170 |

Die Sauerstoffaufnahme der Einschichtfolien liegt nach 150 Tagen Messdauer abhängig von der Konzentration an reaktiv eingebundenen epoxy-terminierten Polybutadien im Bereich von 5,0-13,0 mg Sauerstoff/g Folie.

## Patentansprüche

1. Verwendung von Polydien mit endständigen Epoxygruppen als Sauerstofffänger, **dadurch gekennzeichnet, dass** es sich bei dem epoxyterminierten Polydien um Polybutadien mit Epoxygruppen handelt, wobei das Polybutadien die aus 1,3-Butadien abgeleiteten Monomereinheiten 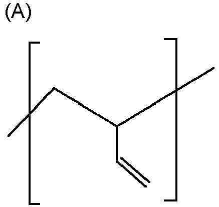 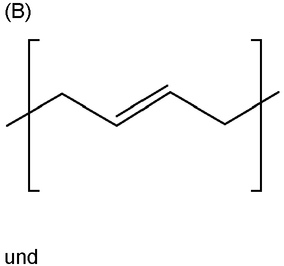 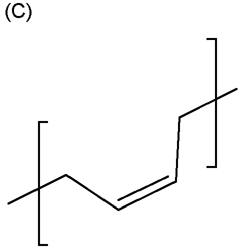 umfasst, wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt, wobei die Epoxygruppen die Formel (I) 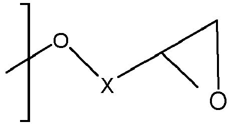 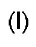 aufweisen und X eine lineare oder verzweigte Alkylengruppe darstellt, bevorzugt eine lineare Alkylengruppe der Formel -(CH₂)ₓ-, wobei x 1 bis 4 ist.

2. Verwendung gemäß Anspruch 1, **dadurch gekennzeichnet, dass** der Anteil von A an der Gesamtheit der im Polybutadien enthaltenen aus 1,3-Butadien abgeleiteten Monomereinheiten 15 bis 30 Mol-%, der Anteil von B an der Gesamtheit der im Polybutadien enthaltenen aus 1,3-Butadien abgeleiteten Monomereinheiten 50 bis 70 Mol-% und der Anteil von C an der Gesamtheit der im Polybutadien enthaltenen aus 1,3-Butadien abgeleiteten Monomereinheiten 15 bis 30 Mol-% beträgt.

3. Verwendung gemäß Anspruch 1 oder 2, **dadurch gekennzeichnet, dass** es sich um Beschichtungen enthaltend Polydien mit endständigen Epoxygruppen handelt.

4. Verbundstoffe für Verpackungsanwendungen mindestens enthaltend ein Polydien mit endständigen Epoxygruppen, **dadurch gekennzeichnet, dass** es sich bei dem epoxyterminierten Polydien um Polybutadien mit Epoxygruppen handelt, wobei das Polybutadien die aus 1,3-Butadien abgeleiteten Monomereinheiten 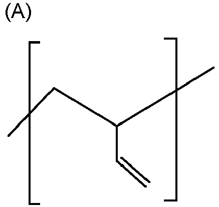 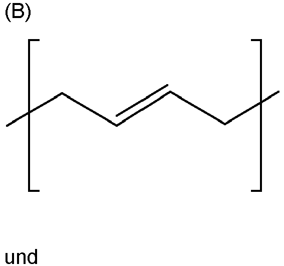 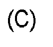 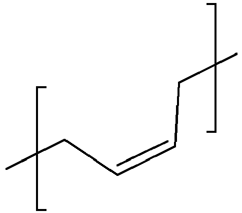 umfasst, wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt, wobei die Epoxygruppen die Formel (I) 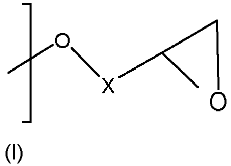 aufweisen und X eine lineare oder verzweigte Alkylengruppe darstellt, bevorzugt eine lineare Alkylengruppe der Formel -(CH₂)ₓ-, wobei x 1 bis 4 ist.

5. Verbundstoffe gemäß Anspruch 4, **dadurch gekennzeichnet, dass** sie aus mindestens zwei Schichten bestehen.

6. Verbundstoffe gemäß Anspruch 5, **dadurch gekennzeichnet, dass** die mindestens zwei Schichten aus voneinander verschiedenen Materialien bestehen.

7. Verbundstoffe gemäß einem oder mehreren der Ansprüche 4 bis 6, **dadurch gekennzeichnet, dass** sie als flexible Folienlagen, flexible Beutel, feste Behälter oder Kombinationen davon vorliegen.

8. Verbundstoffe gemäß einem oder mehreren der Ansprüche 4 bis 7, **dadurch gekennzeichnet, dass** die Polydiene mit endständigen Epoxygruppen in einer, einigen oder allen der Schichten der Verbundstoffe verwendet werden.

9. Verbundstoffe gemäß einem oder mehreren der Ansprüche 4 bis 8, **dadurch gekennzeichnet, dass** das Polydien mit Epoxygruppen in eine Schicht eingebracht wird, die aus einem polymeren sauerstoffimpermeablen Basispolymer besteht.

10. Verbundstoffe gemäß Anspruch 9, **dadurch gekennzeichnet, dass** das Basispolymer ausgewählt ist aus der Gruppe umfassend Polyethylene, Polyester, Polyvinylchlorid (PVC); Polyvinylidenchlorid (PVDC); Polycaprolactonpolymere und Ethylencopolymere, Poly(vinylalkohol) (PVOH), Ionomere, Polyamide sowie Amidcopolymere.

11. Verbundstoffe gemäß einem oder mehreren der Ansprüche 4 bis 10, **dadurch gekennzeichnet, dass** das Polydien mit endständigen Epoxygruppen in Kombination mit weiteren Sauerstoffabfangmitteln vorliegt.

12. Verbundstoffe gemäß Anspruch 11, **dadurch gekennzeichnet, dass** die weiteren Sauerstoffabfangmittel in derselben Schicht wie das Polydien mit endständigen Epoxygruppen enthalten sind.

13. Verbundstoffe gemäß Anspruch 11, **dadurch gekennzeichnet, dass** die weiteren Sauerstoffabfangmittel Bestandteil einer von der das Polydien mit endständigen Epoxygruppen enthaltenden verschiedenen Schicht sind.

14. Verbundstoffverpackungen mindestens enthaltend ein Polydien mit endständigen Epoxygruppen, **dadurch gekennzeichnet, dass** es sich bei dem epoxyterminierten Polydien um Polybutadien mit Epoxygruppen handelt, wobei das Polybutadien die aus 1,3-Butadien abgeleiteten Monomereinheiten 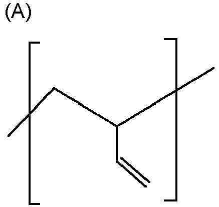 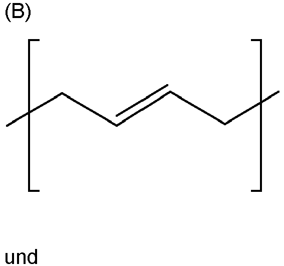 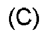 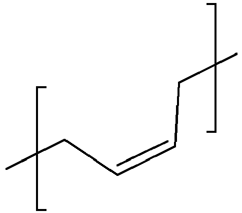 umfasst, wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt, wobei die Epoxygruppen die Formel (I) 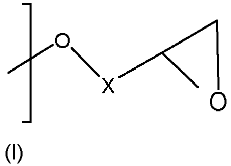 aufweisen und X eine lineare oder verzweigte Alkylengruppe darstellt, bevorzugt eine lineare Alkylengruppe der Formel -(CH₂)ₓ-, wobei x 1 bis 4 ist.

## Claims

1. Use of polydiene having terminal epoxy groups as oxygen scavenger, **characterized in that** the epoxy-terminated polydiene is polybutadiene having epoxy groups, where the polybutadiene comprises the 1,3-butadiene-derived monomer units 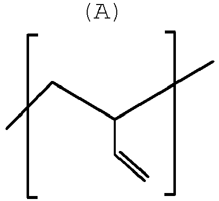 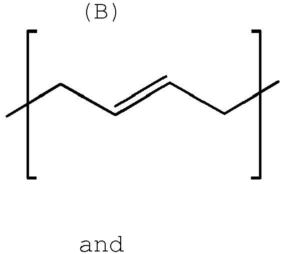 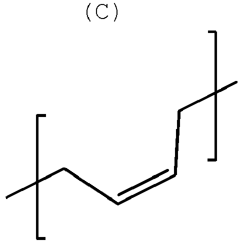 where the proportion of A in the entirety of the 1,3-butadiene-derived monomer units present in the polybutadiene is from 10 to 60 mol per cent, and where the sum of the proportions of B and C in the entirety of the 1,3-butadiene-derived monomer units present in the polybutadiene is from 40 to 90 mol per cent, where the epoxy groups have the formula (I) 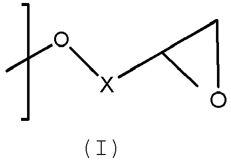 and X is a linear or branched alkylene group, preferably a linear alkylene group of the formula -(CH₂)ₓ-, where x is from 1 to 4.

2. Use according to Claim 1, **characterized in that** the proportion of A in the entirety of the 1,3-butadiene-derived monomer units present in the polybutadiene is from 15 to 30 mol per cent, the proportion of B in the entirety of the 1,3-butadiene-derived monomer units present in the polybutadiene is from 50 to 70 mol per cent and the proportion of C in the entirety of the 1,3-butadiene-derived monomer units present in the polybutadiene is from 15 to 30 mol per cent.

3. Use according to Claims 1 or 2, **characterized in that** it involves coatings comprising polydiene having terminal epoxy groups.

4. Composite materials for packaging applications at least comprising a polydiene having terminal epoxy groups, **characterized in that** the epoxy-terminated polydiene is polybutadiene having epoxy groups, where the polybutadiene comprises the 1,3-butadiene-derived monomer units 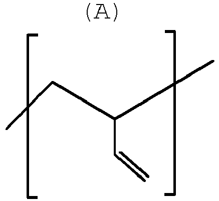 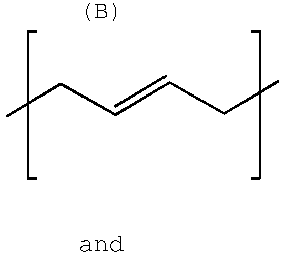 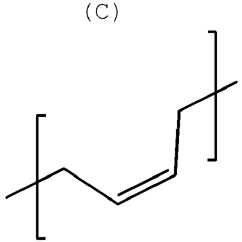 where the proportion of A in the entirety of the 1,3-butadiene-derived monomer units present in the polybutadiene is from 10 to 60 mol per cent, and where the sum of the proportions of B and C in the entirety of the 1,3-butadiene-derived monomer units present in the polybutadiene is from 40 to 90 mol per cent, where the epoxy groups have the formula (I) 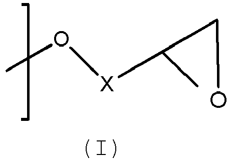 and X is a linear or branched alkylene group, preferably a linear alkylene group of the formula -(CH₂)ₓ-, where x is from 1 to 4.

5. Composite materials according to Claim 4, **characterized in that** they are composed of at least two layers.

6. Composite materials according to Claim 5, **characterized in that** the materials of which the at least two layers are composed differ from one another.

7. Composite materials according to one or more of Claims 4 to 6, **characterized in that** they take the form of flexible film layers, flexible pouches, self-supporting containers or combinations thereof.

8. Composite materials according to one or more of Claims 4 to 7, **characterized in that** the polydienes having terminal epoxy groups are used in one, some or all of the layers of the composite materials.

9. Composite materials according to one or more of Claims 4 to 8, **characterized in that** the polydiene having epoxy groups is introduced into a layer which is composed of a polymeric oxygen-impermeable main polymer.

10. Composite materials according to Claim 9, **characterized in that** the main polymer is selected from the group comprising polyethylenes, polyester, polyvinyl chloride (PVC); polyvinylidene chloride (PVDC); polycaprolactone polymers and ethylene copolymers, poly(vinyl alcohol) (PVOH), ionomers, polyamides and amide copolymers.

11. Composite materials according to one or more of Claims 4 to 10, **characterized in that** the polydiene having terminal epoxy groups is present in combination with other means of oxygen scavenging.

12. Composite materials according to Claim 11, **characterized in that** the other means of oxygen scavenging and the polydiene having terminal epoxy groups are present in the same layer.

13. Composite materials according to Claim 11, **characterized in that** the other means of oxygen scavenging are constitutents of a layer differing from the layer comprising the polydiene having terminal epoxy groups.

14. Composite-material packaging at least comprising a polydiene having terminal epoxy groups, **characterized in that** the epoxy-terminated polydiene is polybutadiene having epoxy groups, where the polybutadiene comprises the 1,3-butadiene-derived monomer units 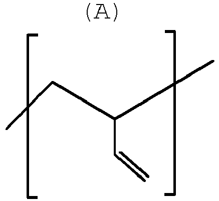 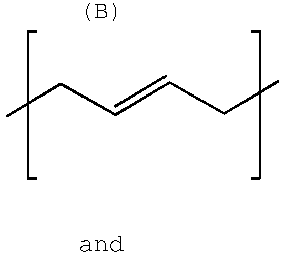 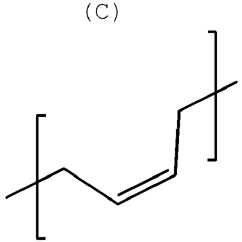 where the proportion of A in the entirety of the 1,3-butadiene-derived monomer units present in the polybutadiene is from 10 to 60 mol per cent, and where the sum of the proportions of B and C in the entirety of the 1,3-butadiene-derived monomer units present in the polybutadiene is from 40 to 90 mol per cent, where the epoxy groups have the formula (I) 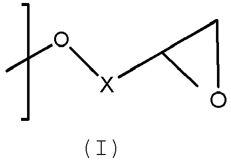 and X is a linear or branched alkylene group, preferably a linear alkylene group of the formula -(CH₂)ₓ-, where x is from 1 to 4.

## Revendications

1. Utilisation d'un polydiène doté de groupes époxy terminaux en tant que capteur d'oxygène, **caractérisé en ce que** le polydiène à terminaisons époxy est un polybutadiène doté de groupes époxy, le polybutadiène comprenant les motifs monomériques issus du 1,3-butadiène 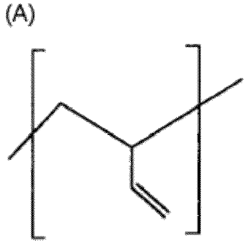 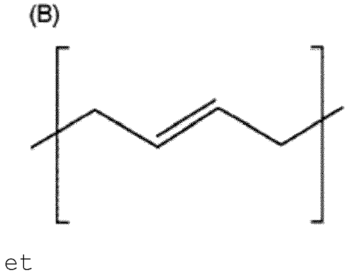 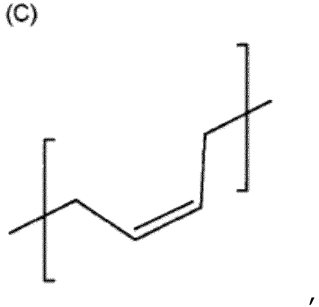 la proportion de A par rapport à la totalité des motifs monomériques issus du 1,3-butadiène contenus dans le polybutadiène étant de 10 à 60 pour cent en moles, et la somme des proportions de B et C par rapport à la totalité des motifs monomériques issus du 1,3-butadiène contenus dans le polybutadiène étant de 40 à 90 pour cent en moles, les groupes époxy présentant la formule (I) 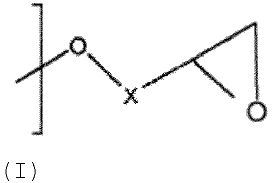 et X représentant un groupe alkylène linéaire ou ramifié, préférablement un groupe alkylène linéaire de formule -(CH₂)ₓ-, x étant 1 à 4.

2. Utilisation selon la revendication 1, **caractérisée en ce que** la proportion de A par rapport à la totalité des motifs monomériques issus du 1,3-butadiène contenus dans le polybutadiène est de 15 à 30 % en moles, la proportion de B par rapport à la totalité des motifs monomériques issus du 1,3-butadiène contenus dans le polybutadiène est de 50 à 70 % en moles et la proportion de C par rapport à la totalité des motifs monomériques issus du 1,3-butadiène contenus dans le polybutadiène est de 15 à 30 % en moles.

3. Utilisation selon la revendication 1 ou 2, **caractérisée en ce que** ce sont des revêtements contenant un polydiène doté de groupes époxy terminaux.

4. Matériaux composites pour des applications d'emballage contenant au moins un polydiène doté de groupes époxy terminaux, **caractérisés en ce que** le polydiène à terminaisons époxy est un polybutadiène doté de groupes époxy, le polybutadiène comprenant les motifs monomériques issus du 1,3-butadiène 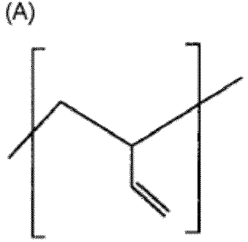 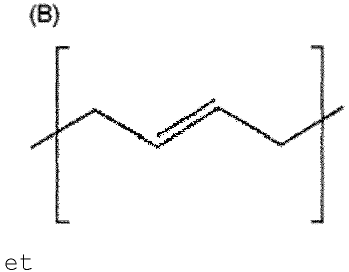 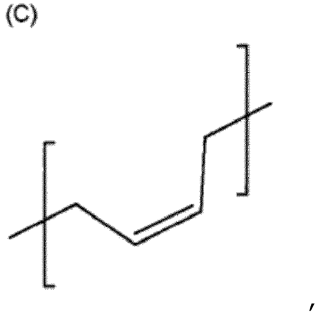 la proportion de A par rapport à la totalité des motifs monomériques issus du 1,3-butadiène contenus dans le polybutadiène étant de 10 à 60 pour cent en moles, et la somme des proportions de B et C par rapport à la totalité des motifs monomériques issus du 1,3-butadiène contenus dans le polybutadiène étant de 40 à 90 pour cent en moles, les groupes époxy présentant la formule (I) 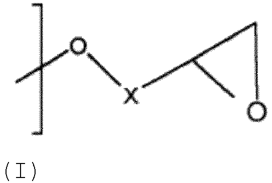 et X représentant un groupe alkylène linéaire ou ramifié, préférablement un groupe alkylène linéaire de formule -(CH₂)ₓ-, x étant 1 à 4.

5. Matériaux composites selon la revendication 4, **caractérisés en ce qu'**ils sont constitués d'au moins deux couches.

6. Matériaux composites selon la revendication 5, **caractérisés en ce que** les au moins deux couches sont constituées de matériaux différents l'un de l'autre.

7. Matériaux composites selon l'une ou plusieurs des revendications 4 à 6, **caractérisés en ce qu'**ils sont présents en tant que couches de feuilles flexibles, sachets flexibles, récipients solides ou des combinaisons correspondantes.

8. Matériaux composites selon l'une ou plusieurs des revendications 4 à 7, **caractérisés en ce que** les polydiènes dotés de groupes époxy terminaux sont utilisés dans l'une des couches, dans quelques couches ou dans toutes les couches des matériaux composites.

9. Matériaux composites selon l'une ou plusieurs des revendications 4 à 8, **caractérisés en ce que** le polydiène doté de groupes époxy est introduit dans une couche qui est constituée d'un polymère de base polymérique imperméable à l'oxygène.

10. Matériaux composites selon la revendication 9, **caractérisés en ce que** le polymère de base est choisi dans le groupe comprenant des polyéthylènes, des polyesters, un poly(chlorure de vinyle) (PVC) ; un poly(chlorure de vinylidène) (PVDC) ; des polymères de type polycaprolactone et des copolymères d'éthylène, un poly(alcool vinylique) (PVOH), des ionomères, des polyamides ainsi que des copolymères d'amide.

11. Matériaux composites selon l'une ou plusieurs des revendications 4 à 10, **caractérisés en ce que** le polydiène doté de groupes époxy terminaux est présent en combinaison avec d'autres agents de captage de l'oxygène.

12. Matériaux composites selon la revendication 11, **caractérisés en ce que** les autres agents de captage de l'oxygène sont contenus dans la même couche que le polydiène doté de groupes époxy terminaux.

13. Matériaux composites selon la revendication 11, **caractérisés en ce que** les autres agents de captage de l'oxygène font partie d'une couche différente de celle qui contient le polydiène doté de groupes époxy terminaux.

14. Emballages en matériau composite contenant au moins un polydiène doté de groupes époxy terminaux, **caractérisés en ce que** le polydiène à terminaisons époxy est un polybutadiène doté de groupes époxy, le polybutadiène comprenant les motifs monomériques issus du 1,3-butadiène 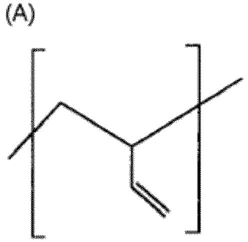 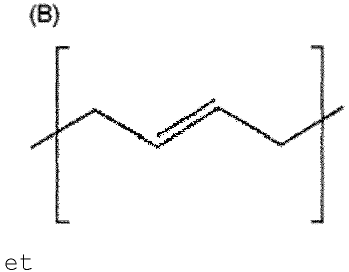 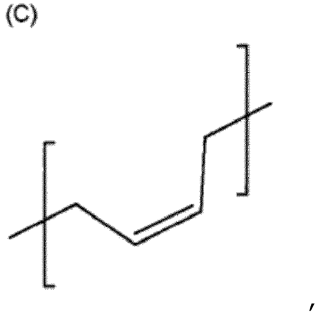 la proportion de A par rapport à la totalité des motifs monomériques issus du 1,3-butadiène contenus dans le polybutadiène étant de 10 à 60 pour cent en moles, et la somme des proportions de B et C par rapport à la totalité des motifs monomériques issus du 1,3-butadiène contenus dans le polybutadiène étant de 40 à 90 pour cent en moles, les groupes époxy présentant la formule (I) 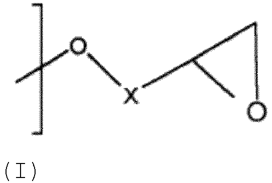 et X représentant un groupe alkylène linéaire ou ramifié, préférablement un groupe alkylène linéaire de formule -(CH₂)ₓ-, x étant 1 à 4.
